# EUROPÄISCHE PATENTANMELDUNG

(11) **EP 4 563 253 A1**
(43) Veröffentlichungstag der Anmeldung: **04.06.2025**
(21) Anmeldenummer: 23213052.6
(22) Anmeldetag: 29.11.2023
(51) Int. Cl.: B09B 3/30, B09B 3/10, B09B 3/80, C02F 11/121, C02F 9/00, C02F 1/52, C02F 1/00, C02F 1/28, B09C 1/02

(54) **MOBILE ANLAGE UND VERFAHREN ZUM REINIGEN VON BODENMATERIAL**

(71) Anmelder: Bauer Resources GmbH, 86529 Schrobenhausen (DE)
(72) Erfinder: Unger, Heinrich, 44575 Castrop-Rauxel (DE)
(74) Vertreter: Wunderlich & Heim Patentanwälte PartG mbB

(57) **Zusammenfassung**

Die Erfindung betrifft eine_mobile Anlage zum Reinigen von Bodenmaterial oder mineralischem Abfall von wasserlöslichen chemischen Substanzen, insbesondere von PFAS, mit einem ersten Modul, welches zumindest eine Moduleinheit zum Sieben und Waschen umfasst, welche eine Zuführeinrichtung zum Zuführen von Prozesswasser zu dem zu reinigenden Bodenmaterial/mineralischem Abfall und eine Siebeinrichtung aufweist, mit welchem ein Grobkorn abtrennbar und waschbar ist, wobei feinerer Kornanteil des zu reinigenden Bodenmaterials/mineralischen Abfalls verbleibt, durch welchen zusammen mit Prozesswasser ein Prozessschlamm gebildet ist, einem zweiten Modul, welches eine Moduleinheit zum Abtrennen von Prozesswasser aus dem Prozessschlamm aufweist, einem dritten Modul, welches zumindest eine Moduleinheit mit einem Rohwasserbecken zum Aufnehmen von Prozesswasser mit aufgenommenen chemischen Substanzen, insbesondere PFAS, eine Moduleinheit mit mindestens einer Filtereinrichtung und/oder einer Adsorptionseinheit zum Filtern des Prozesswassers bzw. zum Abtrennen der chemischen Substanzen, insbesondere von PFAS, und mindestens eine Moduleinheit mit einem Reinwasserbecken zum Aufnehmen des gefilterten/behandelten Prozesswassers aufweist, und einem vierten Modul mit mindestens einer Moduleinheit zum Steuern der Anlage, wobei die einzelnen Moduleinheiten als eigenständige und von einem Lastkraftwagen transportierbare Einheiten ausgebildet sind, wobei die Anlage insgesamt leicht transportierbar und montierbar ist.

## Beschreibung

Die Erfindung betrifft eine_mobile Anlage zum Reinigen von Bodenmaterial oder mineralischem Abfall von wasserlöslichen chemischen Substanzen, insbesondere von PFAS, gemäß dem Anspruch 1.

Die Erfindung betrifft weiter ein Verfahren zum Betreiben einer mobilen Anlage zum Reinigen von Bodenmaterial oder mineralischem Abfall von wasserlöslichen chemischen Substanzen, insbesondere von PFAS, gemäß dem Anspruch 11.

Der Reinigung von Böden oder mineralischem Abfall, insbesondere gemischtkörnigem Bodenhaushub, von wasserlöslichen chemischen Substanzen kommt eine immer größere Bedeutung zum Schutz des Grundwassers zu. Insbesondere eine Kontamination mit Substanzen aus der Stoffgruppe der Per- und polyfluorierten Alkylverbindungen, auch PFAS genannt, stellt ein immer größer werdendes Problem dar. PFAS sind weder abiotisch noch biologisch abbaubar und thermisch stabil. Einträge von PFAS in Böden treten beispielsweise durch den Einsatz von fluorhaltigen Löschmitteln bei Großbränden oder Feuerwehrübungen sowie auf Betriebsstandorten in einigen Industriebranchen auf, etwa bei der Textilverarbeitung, der Papierherstellung, der Galvanisierung und weiteren.

Insbesondere bei einer großflächigen Belastung von Böden oder mineralischen Abfällen ist es aufgrund der Stabilität dieser chemischen Substanzen bisher erforderlich, diese Materialien einer Hochtemperaturverbrennung zu unterziehen oder sie in speziell gesicherten Deponien abzulagern. Demgegenüber bietet eine aktive Reinigung wirtschaftliche und ökologische Vorteile.

Eine Dekontaminierung von Bodenmaterial, welches in der Regel in sehr großen Mengen anfallen kann, erfordert einen erheblichen apparativen Aufwand, wobei zu reinigendes Bodenmaterial in der Regel mit einem Lkw zu einer stationären Anlage transportiert und nach durchgeführter Dekontaminierung wieder rücktransportiert werden muss. Dies ist kostenaufwändig und im Übrigen umweltbelastend.

Bei einer Sanierung von großen Arealen ist es daher bekannt, an einem Sanierungsort eine Reinigungsanlage zu errichten, um so den Transportaufwand möglichst gering zu halten. Der Aufbau einer derartigen Anlage dauert mehrere Wochen und ist daher nur wirtschaftlich, wenn relativ großflächige Areale und/oder große Materialvolumen teilweise über mehrere Monate oder weit über ein Jahr hinaus zu dekontaminieren sind.

Der Erfindung liegt die **Aufgabe** zugrunde, eine Anlage und ein Verfahren anzugeben, mit welchen eine besonders effiziente Dekontamination von Bodenmaterial oder mineralischem Abfall erzielt werden kann.

Die Aufgabe wird nach der Erfindung zum einen durch eine mobile Anlage mit den Merkmalen des Anspruchs 1 sowie ein Verfahren mit den Merkmalen des Anspruchs 11 gelöst. Bevorzugte Ausführungsformen der Erfindung sind in den jeweils abhängigen Ansprüchen angegeben.

Erfindungsgemäß ist eine mobile Anlage zum Reinigen von Bodenmaterial oder mineralischem Abfall von wasserlöslichen chemischen Substanzen, insbesondere von PFAS, vorgesehen, mit einem ersten Modul, welches zumindest eine Moduleinheit zum Sieben und Waschen umfasst, welche eine Zuführeinrichtung zum Zuführen von Prozesswasser zu dem zu reinigenden Bodenmaterial/mineralischem Abfall und eine Siebeinrichtung aufweist, mit welchem ein Grobkorn abtrennbar und waschbar ist, wobei feinerer Kornanteil des zu reinigenden Bodenmaterials/mineralischen Abfalls verbleibt, durch welchen zusammen mit Prozesswasser ein Prozessschlamm gebildet wird, einem zweiten Modul, welches eine Moduleinheit zum Abtrennen von Prozesswasser aus dem Prozessschlamm aufweist, einem dritten Modul, welches zumindest eine Moduleinheit mit einem Rohwasserbecken zum Aufnehmen von Prozesswasser mit aufgenommenen chemischen Substanzen, insbesondere PFAS, eine Moduleinheit mit mindestens einer Filtereinrichtung und/oder mindestens einer Adsorptionseinrichtung zum Filtern/Reinigen des Prozesswassers bzw. zum Abtrennen der chemischen Substanzen, insbesondere von PFAS, und mindestens eine Moduleinheit mit einem Reinwasserbecken zum Aufnehmen des gereinigten Prozesswassers aufweist, und einem vierten Modul mit mindestens einer Moduleinheit zum Steuern der Anlage, wobei die einzelnen Moduleinheiten als eigenständige und von einem Lastkraftwagen transportierbare Einheiten ausgebildet sind, wobei die Anlage insgesamt leicht transportierbar und montierbar ist.

Eine Grundidee der Erfindung liegt darin, eine mobile Anlage zum Reinigen von Bodenmaterial / mineralischem Abfall, also allgemein von körnigen Materialien, von wasserlöslichen chemischen Substanzen mit einem modularen Aufbau vorzusehen, wobei die einzelnen Anlagenmodule jeweils mit einem oder mehreren Moduleinheiten ausgebildet sind. Die einzelnen Moduleinheiten sind so konzipiert, dass sie als eigenständige Einheiten transportierbar sowie montierbar und demontierbar sind.

Eine derartige Anlage kann leicht transportiert und montiert werden, was innerhalb weniger Tage und typischerweise in einem Zeitraum von unter einer Woche möglich ist. Entsprechend schnell kann die Anlage mit den einzelnen Moduleinheiten ebenso wieder demontiert und abtransportiert werden. Ein Abtransport kann zu einem weiteren Einsatzort oder an eine Zwischenlagerstelle erfolgen, bis ein weiterer Einsatz ansteht.

Aufgrund der Modularität sowie leichten Transportierbarkeit und Montierbarkeit kann die Anlage auch unmittelbar an Einsatzorten aufgestellt werden, welche bisher aufgrund von begrenzten Materialvolumen nicht wirtschaftlich für eine lokale Reinigungsanlage waren. Insgesamt lässt sich mit der erfindungsgemäßen mobilen Anlage eine flexiblere, effizientere und auch umweltschonendere Dekontamination von Böden und mineralischem Abfall realisieren.

Die Erfindung betrifft insbesondere eine mobile PFAS-Bodenwaschanlage, welche eine Entfernung von PFAS-Verbindungen aus gemischtkörnigen Böden und mineralischen Abfällen erlaubt. Der PFAS-haltige Boden oder der mineralische Abfall wird mit Wasser aufgeschlämmt und die PFAS-Verbindungen gehen aus der Bodenmatrix in die Wasserphase über, sie werden mobilisiert. Die Wasserphase wird dann über ein geeignetes Verfahren von der festen Phase abgetrennt. Die PFAS-Verbindungen werden damit aus dem Boden oder dem mineralischen Abfall entfernt. Das PFAS-haltige Wasser wird anschließend gereinigt, indem die PFAS-Verbindungen durch eine PFAS-Senke, vorzugsweise Wasserreinigungsanlage insbesondere mit Aktivkohlefilter, aus dem Wasser entfernt werden, sie werden immobilisiert. Das gereinigte Wasser wird dann zum Waschen wiederverwendet, es wird im Kreislauf gefahren. Die Zugabe an Wasser zur Mobilisierung von PFAS-Verbindungen aus dem Boden, auch als Wasser zu Boden-Verhältnis zu beschreiben, hängt vom PFAS-Gehalt und der Matrix des Bodens oder des mineralischen Abfalls ab und wird darauf individuell angepasst. Beim Waschen des PFAS-Bodens oder des mineralischen Abfalls werden, dem Ausgangsmaterial angepasst, beispielsweise drei oder mehr unterschiedliche gereinigte Kornfraktionen gebildet, bezeichnet als Grobkorn, Mittelkorn und Feinkorn. Durch das zusätzliche Einbringen von kinetischer Energie etwa durch ein Trommelsieb und/oder eine Entsandung, werden PFAS-Verbindungen aus der Bodenmatrix mobilisiert. Der Wirkungsgrad für die PFAS-Entfernung der gemischtkörnigen Böden liegt dabei bis zu 99%. Die mobile PFAS-Bodenwaschanlage ist für gemischtkörnige (sandig-kiesige) Böden mit einem Schluff- und Tongehalt von bis circa 20% geeignet.

Das Verfahren dient zur Aufbereitung von PFAS-kontaminierten Böden vor Ort um die gereinigten Böden vor Ort wieder einbauen zu können. Das angewendete Wasser zu Boden-Verhältnis für die Wäsche ist neben der PFAS-konzentration im Boden auch auf die aktuellen PFAS-Zuordnungswerte zum Wiedereinbau des Materials auszulegen. Im Gegensatz zu klassischen Bodenwaschanlagen, welche Böden in Kornfraktionen separieren, löst die mobile PFAS-Bodenwaschanlage PFAS-Verbindungen zusätzlich aus der Bodenmatrix heraus.

Das Prinzip zur Entfernung von PFAS-Verbindungen durch eine mobile PFAS-Bodenwäsche kann insbesondere aufweisen:
1) Aufschlämmung des PFAS-kontaminierten gemischtkörnigen Bodens mit Wasser in mehreren Stufen;
2) Übergang PFAS-Verbindungen von der Bodenmatrix in die Wasserphase (Mobilisierung von PFAS);
3) Fraktionierung des Bodenmaterials;
4) Ausschleusung von nicht weiter behandelbarem Feinkorn;
5) Reinigung des PFAS-haltigen Wassers (Immobilisierung von PFAS);
6) Wiederverwendung des gereinigten Wassers zum Aufschlämmen von PFASkontaminiertem gemischtkörnigen Boden.

Eine besonders bevorzugte Ausführungsform der Erfindung besteht darin, dass mindestens eine transportabel Moduleinheit, vorzugsweise alle Moduleinheiten, Abmessungen aufweisen, welche den Abmessungen von Standard-Transportcontainern entsprechen oder innerhalb dieser Abmessungen liegen. Die einzelnen Moduleinheiten können so mit herkömmlichen Lastkraftwagen beziehungsweise Tiefladern effizient transportiert werden. Durch die Ausgestaltung mit Abmessungen innerhalb oder gemäß Standard-Transportcontainern ist auch ohne Weiteres ein Bahntransport oder ein Straßentransport ohne besondere verkehrspolizeiliche Zulassung möglich.

Gemäß einer Weiterbildung der Erfindung ist es vorteilhaft, dass mindestens eine Moduleinheit, vorzugsweise alle Moduleinheiten, selbsttragend ausgebildet sind, insbesondere mit einer Tragplattform und/oder einem Tragrahmen. Durch die Ausgestaltung als selbsttragende Moduleinheiten können diese besonders einfach transportiert und gehandhabt werden. Insbesondere kann für eine selbsttragende Ausgestaltung eine Tragplattform, insbesondere eine rechteckige Bodenplatte oder ein vorzugsweise kastenförmiger Tragrahmen ausgebildet sein. Die Tragplattform kann die Grundabmessungen eines Standard-Containers aufweisen. Eine dreidimensionaler Tragrahmen kann sowohl die Grundabmessungen als auch die Höhenabmessungen eines Standard-Transportcontainers aufweisen, so dass diese besonders einfach mit herkömmlichen Transportmitteln zwischen einzelnen Arbeitsorten verbracht werden können.

Eine weitere Verbesserung der Handhabung wird nach einer Ausgestaltung der Erfindung dadurch erzielt, dass mindestens eine Moduleinheit, vorzugsweise alle Moduleinheiten, mindestens eine Verbindungseinrichtung für ein Hebezeug aufweisen. Dies können Verbindungspunkte oder Ösen für Kranhaken, insbesondere von Mobilkränen, und/oder Aufnahmen für Gabeln von Hubstaplern sein. Dies erleichtert den Zu- und Abtransport sowie die Montage und Demontage der mobilen Anlage.

Nach einer weiteren Ausführungsvariante der Erfindung ist vorgesehen, dass an der Moduleinheit an definierten Stellen lösbare Anschlusseinrichtungen für Leitungen angeordnet sind, mit welchen Flüssigkeit, Energie und/oder Daten geleitet werden können. Die einzelnen Moduleinheiten können so zunächst an einem gewünschten Arbeitsort aufgestellt werden, wobei anschließend die notwendigen Leitungen zwischen den definierten Anschlusseinrichtungen an den jeweiligen Moduleinheiten mit entsprechenden Leitungen angeschlossen beziehungsweise verbunden werden können. Die Leitungen in den Moduleinheiten sind verlegt und müssen grundsätzlich nicht geändert werden. Die Anschlusseinrichtungen sind leicht lösbar und stellen insbesondere Schnellverbindungsanschlüsse für die jeweilige Leitungsart dar. Insbesondere für Flüssigkeitsanschlüsse, insbesondere Anschlüsse für Wasser und Schlamm, sind einheitliche Leitungen mit Leitungsanschlüssen vorgesehen, ebenso auch für Energieleitungen, insbesondere für elektrischen Strom, Hydraulikfluid und/oder Druckluft. Für Datenleitungen sind insbesondere einheitliche Anschlüsse für BUS-Leitungen an den Moduleinheiten angeordnet. Dies ermöglicht es, die mobile Anlage nach dem Aufstellen der einzelnen Moduleinheiten, relativ schnell in einen betriebsfähigen Zustand zu bringen. Dies kann grundsätzlich durch Personal vor Ort erfolgen. Spezialisierte Anlagenbauer sind hierzu nicht erforderlich.

Für den Verfahrensschritt des Siebens und Waschens des zu reinigenden körnigen Materials ist es nach einer Ausführungsform der Erfindung bevorzugt, dass in dem ersten Modul die Moduleinheit zum Sieben und Waschen ein Trommelsieb umfasst, welches insbesondere eine rotierend angetriebene Siebtrommel aufweist. Das zu reinigende Material wird dem Trommelsieb an einer Eingangsseite zugegeben, wobei das Material das Trommelsieb durch eine konische Gestaltung der Siebtrommel und/oder bei Verwendung eines zylindrischen Trommelsiebs eine geneigte Anordnung der Trommelachse zur Horizontalen zu einer Ausgangsseite hin durchläuft. Durch Zugabe von Wasser in den Trommelinnenraum kann ein gewünschtes Sieben oder Klassieren nach Korngröße und gleichzeitig ein Waschen und damit Abtragen von wasserlöslichen Substanzen erfolgen. Vorzugsweise rotiert die Siebtrommel, so dass durch die dadurch bewirkte mechanische Bewegung des Materials der Effekt des Siebens und Waschens erhöht wird.

Das Prozesswasser kann über eine Zuführeinrichtung an einer Stelle oder an mehreren Stellen des Trommelsiebes, insbesondere über Zuführdüsen mit einem gewissen Druck, zugeführt werden. Entsprechend der Ausgestaltung von Sieböffnungen im Trommelsieb kann so ein gewaschener Grobkornanteil an der Ausgangsseite der Siebtrommel abgeführt werden, während das Prozesswasser mit den kleineren Kornanteilen die Wand der Siebtrommel durchdringt und als ein Prozessschlamm abgeleitet wird.

Gemäß einer weiteren bevorzugten Ausgestaltung der Erfindung ist es vorteilhaft, dass in dem ersten Modul zur Reduktion des Feststoffanteiles in dem Prozessschlamm eine Moduleinheit zum Entsanden und/oder eine Moduleinheit mit einem Lamellenklärer angeordnet ist. Hierdurch kann ein weiteres Abtrennen oder Klassieren des zuvor gebildeten Prozessschlamms erfolgen, wobei ein Kornanteil bis zu einer gewünschten Korngröße aus dem Prozessschlamm abgetrennt wird. Durch Zugabe von weiterem Prozesswasser kann ein zusätzlicher Wascheffekt und damit ein zusätzliches Auslösen der chemischen Substanzen erfolgen.

Für eine weitere Fest-Flüssig-Trennung ist es nach einer Ausführungsform der Erfindung bevorzugt, dass in dem zweiten Modul die Moduleinheit mit der mindestens einen Filtereinrichtung eine Membranfilterpresse und/oder eine Kammerfilterpresse zum Abtrennen eines Feinkornanteils aus dem Prozessschlamm aufweist. Je nach Ausgestaltung des Filtermediums kann mit der Membranfilterpresse beziehungsweise der Kammerfilterpresse der Prozessschlamm dahingehend bearbeitet werden, dass auch relativ kleine Feststoffbestandteile entsprechend dem gewählten Filtermedium abgetrennt und die verbliebene Flüssigkeit als Filtrat abgeführt werden. Das Filtrat stellt das mit Schadstoffen angereicherte Prozesswasser, auch Rohwasser genannt, dar.

Ein Abtrennen auch feinster Kornbestandteile kann nach einer Weiterbildung der Erfindung noch dadurch unterstützt werden, dass in dem ersten Modul und/oder dem zweiten Modul eine Station oder eine Moduleinheit zum Ansetzen und Zudosieren von Fällungsmitteln und/oder Flockungsmitteln zu dem gebildeten Prozessschlamm angeordnet ist. Durch das Zusetzen derartiger Mittel können Fein- und Feinststoffanteile ausgefällt oder ausgeflockt werden, wobei diese etwa durch Agglomerieren zu größeren Partikeln geformt werden, welche bei einem Sieben oder Filtern oder Sedimentieren noch zuverlässiger abgetrennt werden können.

Nach einer Weiterbildung der Erfindung ist es bevorzugt, dass in dem dritten Modul das Rohwasserbecken mit verunreinigtem Prozesswasser und/oder das Reinwasserbecken mit gereinigtem Prozesswasser über mindestens eine Rückführleitung mit zumindest einer der Moduleinheiten zur Rückführung von Prozesswasser leitungsverbunden sind.

Zwischen dem mindestens einen Rohwasserbecken und dem mindestens einen Reinwasserbecken, welche jeweils auch geschlossene Behälter oder Tanks sein können, ist mindestens eine Filtereinrichtung und / oder Adsorptionseinrichtung zum Filtern des verunreinigten Prozesswassers angeordnet, so dass die bei den verschiedenen Wasch- und Trennvorgängen aufgenommenen wasserlöslichen chemischen Substanzen hieraus vollständig oder weitgehend bis zu einem vorgesehenen Reduktionsgrad ausgefiltert werden können. Das so gereinigte Prozesswasser wird in mindestens einem Reinwasserbecken aufgenommen.

Von jedem Reinwasserbecken kann dann das aufbereitete und gereinigte Prozesswasser zu bestimmten Moduleinheiten gefördert werden, so dass insgesamt über die Anlage ein Flüssigkeitskreislauf gebildet ist. Das Fördern der Flüssigkeiten kann durch geeignete Fördermittel, insbesondere Pumpen, erfolgen, welche vorzugsweise nahe zu den Anschlusseinrichtungen für die Flüssigkeitsleitungen an geeigneten oder allen Moduleinheiten angeordnet sein können. Die mobile Anlage besteht aus kompakten und mobilen Modulen, diese können auf Baustellen oder direkt am Sanierungsstandort aufgebaut und räumlich variabel kombiniert werden, d.h. den Standortgegebenheiten vor Ort angepasst werden. Die mobile Anlage, auch hierin als PFAS-Bodenwaschanlage bezeichnet, ist eine integrative Anlage, d.h. die Module bestehen wieder aus einzelnen Moduleinheiten für das Waschen und Trennen von verschiedenen Kornfraktionen, die Entwässerung des residualen Schlammes und für die Reinigung des PFAS-haltigen Wassers. Die Moduleinheiten können in Containerbauweise ausgeführt und teilweiße auf Trailern montiert sein. Dies erlaubt eine Logistik mit Standardtransporten auf der Straße, eine geringen Montageaufwand aller Moduleinheiten, einen Aufbau und Einsatzbereitschaft der mobilen PFAS-Bodenwaschanlage innerhalb von einer Woche. Bisherige PFAS-Bodenwaschanlagen sind entweder stationär oder semimobil, d.h. der Transport benötigt spezielle LKWs, der Aufbau dauert mehrere Wochen und ein Einsatz lohnt sich nur bei hohen Durchsätzen oder Mengen an zu waschenden PFAS-kontaminierten Böden.

Daher stellt die mobile PFAS-Bodenwaschanlage eine Neuerung dar. Diese ist ausgezeichnet durch eine Kompaktheit, Mobilität, Einfachheit und eine abgestimmte Steuerung aller mobilen Moduleinheiten untereinander. Die zentrale Steuerung basiert auf einem BUS-System, welche alle Module untereinander vernetzt und die Einzelsteuerung der Module aufeinander abstimmt. Dabei stimmt die zentrale Steuerung die Zugabe an Wasser auf den Gehalt der PFAS-Verbindungen im Boden sowie an der vorliegenden Bodenmatrix ab. Die Bodenmatrix und der Gehalt an PFAS-Verbindungen des Bodens können vorher in einem Analyselabor bestimmt werden. Über die zentrale Steuerung kann das optimale Wasser zu Boden-Verhältnis durch das Steuerungsprogramm automatisch eingestellt werden. Dieses Verhältnis kann im laufenden Waschbetrieb angepasst werden. Die zentrale Steuerung bestimmt auch die Menge an aufzubereiten Wasser und die Aufteilung des Wasserzulaufs in die einzelnen Moduleinheiten.

Weiter benötigt die mobile PFAS-Bodenwaschanlage auch nur geringe Mengen an Frischwasser, da das PFAS-haltige Wasser vor Ort gereinigt wird und im Kreislauf gefahren werden kann. Optional wird alles austretende Wasser, wie Tropfwasser aus den gewaschenen Haufwerken, aufgefangen und wiederverwendet. Die Anlage und die Vorlage Reinwasserbecken muss nur einmal initial mit Frischwasser befüllt werden. Die erforderliche Menge Frischwasser ist so gering, dass dieses beispielsweise per Tankwagen bereitgestellt werden kann. Ebenso können die Abwassermengen, beispielsweise beim Abbau der Anlage so gering sein, dass dieses ebenfalls per Tankwagen abtransportiert werden kann. Strom für den Betrieb der mobilen PFAS-Bodenwaschanlage kann über Generatoren bereitgestellt werden. Die Anlage kann daher autark betrieben werden ist unabhängig von einem Frischwasseranschluss, Abwasseranschluss und/oder von einem örtlichen Stromanschluss.

Weiterhin ist nach der Erfindung ein Verfahren zum Betrieb einer mobilen Anlage zum Reinigen von Bodenmaterial oder mineralischem Abfall von wasserlöslichen chemischen Substanzen, insbesondere von PFAS, vorgesehen, wobei
- in einem ersten Modul, welches zumindest eine Moduleinheit zum Sieben und Waschen umfasst, welche eine Zuführeinrichtung zum Zuführen von Prozesswasser zu dem zu reinigenden Bodenmaterial/mineralischem Abfall und eine Siebeinrichtung aufweist, mit dem Prozesswasser aus dem zu reinigenden Bodenmaterial/mineralischem Abfall ein Grobkorn abgetrennt und gewaschen wird, wobei ein feinerer Kornanteil des zu reinigenden Bodenmaterials/mineralischen Abfalls verbleibt, durch welchen zusammen mit Prozesswasser ein Prozessschlamm gebildet wird,
- in einem zweiten Modul mittels einer Moduleinheit Prozesswasser aus dem Prozessschlamm abgetrennt wird,
- in einem dritten Modul, welches zumindest eine Moduleinheit mit einem Rohwasserbecken zum Aufnehmen von Prozesswasser mit aufgenommenen chemischen Substanzen, insbesondere PFAS, eine Moduleinheit mit mindestens einer Filtereinrichtung und/oder Adsorptionseinrichtung zum Filtern des Prozesswassers bzw. zum Abtrennen der chemischen Substanzen, insbesondere von PFAS, und mindestens eine Moduleinheit mit einem Reinwasserbecken zum Aufnehmen des gefilterten Prozesswassers aufweist, mittels der mindestens einen Filtereinrichtung und/oder einer Adsorptionseinheit durch Filtern/Reinigen von Prozesswasser bzw. Abtrennen und der im Prozesswasser mit aufgenommenen chemischen Substanzen, insbesondere PFAS, ein gereinigtes Reinwasser erzeugt wird, und
- durch ein viertes Modul mit mindestens einer Moduleinheit zum Steuern die mobile Anlage gesteuert wird,
- wobei als einzelne Moduleinheiten eigenständige und von einem Lastkraftwagen transportierbare Einheiten verwendet werden, wobei die Anlage insgesamt leicht transportierbar und montierbar ist.

Das Verfahren kann insbesondre zum Betreiben der zuvor beschriebenen erfindungsgemäßen mobilen Anlage eingesetzt werden. Insbesondere ist das Verfahren zum Reinigen von Bodenmaterial oder mineralischem Abfall von wasserlöslichen chemischen Substanzen mit dieser mobilen Anlage ausgebildet. Es können dabei die zuvor beschriebenen Vorteile erzielt werden.

Eine bevorzugte Verfahrensvariante liegt nach einer Weiterbildung der Erfindung darin, dass die Anlage nach einer Reinigung des Bodenmaterials oder des mineralischen Abfalls an einem ersten Arbeitsort in die einzelnen Moduleinheiten zerlegt und die Moduleinheiten abtransportiert werden können, um an einem zweiten Arbeitsort wieder zu der Anlage montiert zu werden. Die Anlage ist leicht montier- und demontierbar und einfach zu transportieren. Sie kann ohne Weiteres unmittelbar zwischen zwei Einsatzorten verbracht werden oder, falls kein unmittelbarer Folgeeinsatz ansteht, aufgrund der Modularität kompakt zwischengelagert werden. Durch die Modularität ist es auch möglich, bei einem Ausfall einzelner Komponenten diese relativ einfach dadurch zu ersetzen, dass die entsprechende Moduleinheit durch eine Ersatz- oder Reservemoduleinheit ersetzt wird. Dies vermeidet längere Betriebstillstandszeiten bei anstehenden Reparaturen oder Wartungen.

Einzelne Reserve-Moduleinheiten können bereits beim Aufbau der mobilen Anlage berücksichtigt und angeordnet werden, wobei diese Moduleinheiten dann vorzugsweise parallel und nebeneinander angeordnet sind. Etwa für Wartungsarbeiten an bestimmten Komponenten müssen so nur die Leitungen gelöst und an die Ersatz-Moduleinheit angeschlossen werden. Dies kann insbesondere bei wartungsintensiven Moduleinheiten sinnvoll sein, so dass selbst größere Wartungs- oder Reparaturmaßnahmen nur zu einer kurzfristigen Unterbrechung des Betriebsablaufs, typischerweise nur von wenigen Minuten, führen.

Grundsätzlich ermöglicht es die Anlage, dass für bestimmte Verfahrensschritte auch mehrere gleiche Moduleinheiten parallel nebeneinander oder nötigenfalls sogar in Reihe hintereinander geschaltet werden, so dass die Anlage besonders flexibel an unterschiedliche Reinigungsaufgaben anpassbar ist, insbesondere wenn stärker verunreinigtes Material vorliegt.

Die Erfindung wird nachfolgend anhand von bevorzugten Ausführungsbeispielen weiter erläutert, die schematisch in den Zeichnungen dargestellt sind. In den Zeichnungen zeigen:
- Fig. 1: ein schematisches Anlagen- und Ablaufdiagramm zu der Erfindung; und
- Fig. 2: eine schematische Lageanordnung der Moduleinheiten einer mobilen Anlage gemäß der Erfindung.

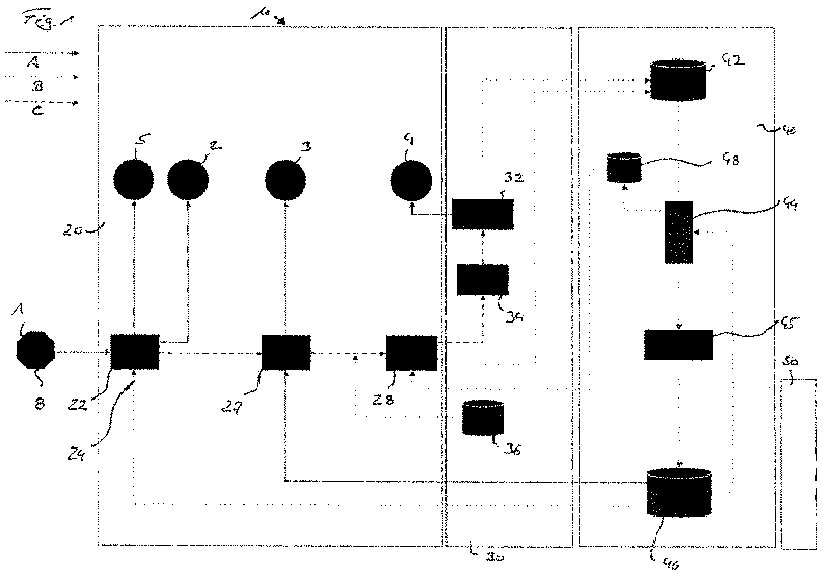

Eine mögliche erfindungsgemäße mobile Anlage 10, wie sie gemäß Figur 1 veranschaulicht ist, weist vorzugsweise vier Module auf:
1) Erstes Modul 20 für Bodenwäsche;
2) Zweites Modul 30 für Schlammbehandlung;
3) Drittes Modul 40 für Wassertechnik;
4) Viertes Modul 50 für Steuerungstechnik.

Die Module 20, 30, 40, 50 bestehen aus einzelnen Moduleinheiten, dies erlaubt eine kompakte, variable Bauform insbesondere in Containerbauweise und für einen einfachen Transport per Standard-LKW der mobilen Anlage 10. Die Anlage 10 wird nachfolgend als PFAS-Bodenwaschanlage beschrieben, welche zum Entfernen von PFAS aus einem Bodenmaterial eingesetzt wird. Es können aber auch andere wasserlösliche Schadstoffe aus körnigen Ausgangsmaterialien gelöst werden, etwa aus mineralischem Abfall. Der Materialfluss ist durch Pfeile verdeutlicht, wobei Pfeile A mit durchgezogener Linie sich auf Feststoff, Pfeile B mit punktierter Linie auf Wasser und Pfeile C mit unterbrochener Linie auf Suspension, welche insbesondere ein Schlamm sein kann, beziehen.

Das erste Modul 20 für Bodenwäsche kann aus folgenden Moduleinheiten aufgebaut sein:
- Trommelsieb 22 (Wascheinheit für Gesamtfraktion, Aufschlämmen des Bodens, Grobkorn abtrennen);
- Entsandung 27 (Wascheinheit für Mittel- und Feinkorn);
- Lamellenklärer 28 (Fällung Feinkorn).

In einer ersten Moduleinheit zum Sieben und Waschen 22 kann ein Trommelsieb für das Waschen der Gesamtfraktion angeordnet sein. Über einen Radlader 8 wird das PFAS-haltige Bodenmaterial 1 zugeführt und in der ersten Moduleinheit 22 mit Wasser aus einer Zuführeinrichtung 24 aufgeschlämmt. Vor der Aufgabe in das Trommelsieb kann Überkorn 5, also größere Steine, durch ein aufgesetztes Sieb abgetrennt werden. Überkörner 5 können das Trommelsieb beschädigen.

Nach der Aufgabe und dem Aufschlämmen werden PFAS-Verbindungen aus der Matrix des Bodenmaterials 1 gelöst und gehen in die Wasserphase über. Ein Grobkorn 2 wird aus dem Bodenmaterial 1 abgetrennt, wobei die Kornfraktion > 5 mm ist. Optional ist die Größe der Kornfraktion über verschiedene Siebeinsätze für das Trommelsieb der ersten Moduleinheit 22 einstellbar.

Das Mittel- und Feinkorn wird im Trommelsieb aufgeschlämmt und geht in Suspension. Die Verweilzeit des aufgeschlämmten Bodenmaterials 1 im Trommelsieb kann optional eingestellt werden. Die erste Moduleinheit 22 mit Trommelsieb kann ebenfalls optional mit einer zweiten nachgeschalteten Wascheinheit, wie einem Dichteseparationsmodul ausgestattet werden. In der zweiten Wascheinheit wird das gewaschene Grobkorn 2 mit Wasser erneut aufgeschlämmt und das zweite Mal gewaschen. Der Output des Trommelsiebs ist ein gewaschenes Grobkorn 2 und eine Suspension aus Mittel- und Feinkorn mit mobilisierten PFAS-Verbindungen im Wasser. Die Suspension wird durch eine Pumpe zu einer zweiten Moduleinheit 27 zur Entsandung gepumpt.

In der zweiten Moduleinheit 27 wird die Entsandung durch das Waschen des Mittel- und Feinkorns durchgeführt, wobei ein Mittelkorn 3 abgetrennt wird. Der untere Trennschnitt des Mittelkorns 3 liegt in der Regel zwischen 0,05 und 0,063 mm, die Korngröße ist aber variabel durch den Einsatz verschiedener Siebe in der Entsandung. Der Entsandung kann ein Hydrozyklon nachgeschaltet werden, um den Wirkungsgrad der Abtrennung des Mittelkorns 3 zu erhöhen.

Das suspendierte Feinkorn 4, die Siebkfraktion < 0,05 ...0,063 mm bleibt in Suspension. Der Output Entsandung sind ein gewaschenes Mittelkorn 3 und eine Suspension mit dem gelösten Feinkorn 4 und mobilisierten PFAS-Verbindungen im Wasseranteil. Der Suspension mit dem suspendierten Feinkorn 4 kann ein Fällungsmittel und/oder Flockungshilfsmittel aus einer Moduleinheit 36 zugesetzt und über eine geeignete Pumpe in den Zulauf der dritten Moduleinheit 28 mit einem Lamellenklärer zugeführt werden.

Die dritte Moduleinheit 28 dient der Abtrennung des überwiegenden Anteils des Feinkorns 4 aus der Suspension durch die vorherige Zugabe eines Fällungsmittels und/oder Flockungshilfsmittels. Das Feinkorn 4 bildet eine absetzbare Flocke, diese sinkt im Lamellenklärer ab. Es findet eine Auftrennung in eine Phase PFAS-haltiges Wasser und eine Phase mit Feinkorn 4 als Dünnschlamm statt. Das abgetrennte PFAS-haltige Wasser fließt im freien Überlauf in die Moduleinheit mit Rohwasserbecken 42 des dritten Moduls 40 für Wassertechnik. Der Dünnschlamm wird in ein zweites Modul 30 mit einer Moduleinheit zum Abtrennen, insbesondere einer Filtereinrichtung, bevorzugt eine Membran-/Kammerfilterpresse 32 (Filtration Dünnschlamm) geleitet.

Das erste Modul 20 zur Bodenwäsche wird im Singlestromverfahren gefahren. Dabei können die erste Moduleinheit 22 mit Trommelsieb und die zweite Moduleinheit 27 zur Entsandung im Waschbetrieb mit unterschiedlichen Wasserverhältnissen angefahren werden. Die Wasserverhältnisse bzw. eine Wasserzugabe liegen bevorzugt zwischen 70% und 90% für das Trommelsieb und zwischen 10% bis 30 % für die Entsandung. Zudem kann das Verhältnis bzw. die Zugabe von Wasser zu Boden variiert werden, typischerweise liegt dieses Verhältnis bei 3:1 bis 7:1, vorzugsweise bei 4:1.

Das dritte Modul 40 Wassertechnik kann aus folgenden Moduleinheiten aufgebaut sein:
- Rohwasserbecken 42 (Vorlage Sand/Kies-Filter und PFAS-Filter);
- Sand/Kies-Filter 44 (Reinigung Grobstoffe PFAS-haltiges Wasser);
- PFAS- Absorptionseinheit 45 (Reinigung PFAS-haltiges Wasser);
- Reinwasserbecken 46 (Vorlage Bodenwäsche).

Eine erste Moduleinheit mit Rohwasserbecken 42 kann als Vorlage für die Moduleinheit mit Filtereinrichtung 44, insbesondere einem Sand/Kies-Filter, und eine Moduleinheit mit PFAS- Absorptionseinheit 45 umfassen. Das Rohwasserbecken 42 kann zusätzlich mit einem Bogensieb 49 für die Abtrennung von nicht gelösten leichten Grob-/Fremdstoffen ausgestattet sein. Der Zulauf des Rohwasserbecken 42 mit PFAS-haltigen Wasser stammt aus dem freien Gefälle der Moduleinheit mit Lamellenklärer 28 und dem Filtrat aus der Moduleinheit mit der Filtereinrichtung, insbesondere einer Membran-/Kammerfilterpresse 32.

Aus dem Rohwasserbecken wird das PFAS-haltige Wasser in die Moduleinheit mit Filtereinrichtung 44, insbesondere ein Sand/Kies-Filter, gepumpt. Diese Moduleinheit mit Filtereinrichtung 44 entfernt gelöste Partikel/Grobstoffe aus dem PFAS-haltigen Wasser. Die Filtereinrichtung 44 kann mit einer Rückspülung ausgestattet sein, um diesen zu reinigen. Die dabei gelösten Partikel/Grobstoffe können mit sauberem Wasser in ein Rückspülbecken 48 gespült und von dort zur Moduleinheit mit Lamellenklärer 28 gefördert werden. Danach läuft das PFAS-haltige Wasser in die Moduleinheit mit PFAS- Absorptionseinheit 45. Diese enthält ein Adsorptionsmaterial, welches als PFAS-Senke wirkt und damit PFAS-Verbindungen aus dem Wasser immobilisiert. Als Adsorbermaterial kann Aktivkohle, mineralische Adsorber oder Ionentauscher, welche speziell auf PFAS-Verbindungen abgestimmt sind, verwendet werden.

Alternativ kann ein physikalisches Verfahren, wie eine Schaumfraktionierung, für die Immobilisation ergänzend oder substituierend zu der PFAS- Absorptionseinheit verwendet werden. Die Größe der Moduleinheiten mit Filtereinrichtung 44 und PFAS- Absorptionseinheit 45 wird entsprechend der PFAS-Konzentration und der zu erwarteten PFAS-Fracht des PFAS-kontaminierten Bodens ausgelegt. Der Ablauf mit dem gereinigten Wasser der Moduleinheit mit PFAS- Absorptionseinheit 45 läuft in die Moduleinheit mit Reinwasserbecken 46, welche als Vorlage für das erste Modul 20 zur Bodenwäsche dient.

Das zweite Modul Schlammbehandlung kann aus folgenden Moduleinheiten aufgebaut sein:
- Dosierstation 36 (Ansetzen und Dosierung Fällungsmittel und/oder Flockungshilfsmittel);
- Schlammvorlage 34
- Membran-/Kammerfilterpresse 32 (Filtration Schlamm).

Eine erste Moduleinheit mit einer Dosierstation 36 erlaubt das Ansetzen von pulverförmigen oder flüssigen Fällungs- und/oder Flockungshilfsmittel und deren Dosierung zu der Moduleinheit mit Lamellenklärer 28 und optional vor der Moduleinheit zum Abtrennen 32, insbesondere mit einer Membran-/Kammerfilterpresse 32. Der geflockte Dünnschlamm aus der Moduleinheit mit Lamellenklärer 28 kann zur Moduleinheit zur Filtration gepumpt werden. Diese Moduleinheit kann aus einem Becken, welches als Schlammvorlage 34 dient und einer mobilen Membran/Kammerfilterpresse 32 gebildet werden. Eine Entwässerung durch Filtration in eine Fest- und Flüssigphase findet in der Moduleinheit zur Filration, insbesondere mittels Membran/Kammerfilterpresse 32 statt. Der Output ist ein stichfester Filterkuchen und ein PFAS-haltiges Filtrat, welche in die Moduleinheit mit Rohwasserbecken 42 geleitet wird zur Aufbereitung.

Alle Moduleinheiten der Module 20, 30, 40 können optional mit Auffangwannen ausgestattet werden. Das dort aufgefangene Wasser kann aufbereitet und wiederverwendet werden.

Das vierte Modul mit Steuerungstechnik 50 kann aus folgenden Moduleinheiten aufgebaut sein:
- Steuerung Bodenwäsche;
- Steuerung Wasseraufbereitung;
- Steuerung Membran-/Kammerfilterpresse;
- Zentralen Steuerung zw. Bodenwäsche, Wasseraufbereitung und Membran/Kammerfilterpresse (BUS-System).

Die erste Moduleinheit steuert alle Moduleinheiten der Bodenwäsche untereinander, das Trommelsieb, die Entsandung und den Lamellenklärer. Die zweite Moduleinheit steuert und überwacht alle Durchflüsse der Moduleinheiten der Wasseraufbereitung; die Pumpen, Ventile und Klappen des Rohwasserbeckens und Reinwasserbeckens, des Sand/Kies-Filters, deren Rückspülung und des PFAS-Filters. Die dritte Moduleinheit steuert den Zulauf und die Einstellungen der Filtration der Membran-/Kammerfilterpresse. Die vierte Moduleinheit besteht aus einer zentralen Steuerung, einem BUS-system, welche als Datenschnittstelle zwischen allen Moduleinheiten fungiert und eine abgestimmte Regelung und einen vollautomatischen Betrieb erlaubt.

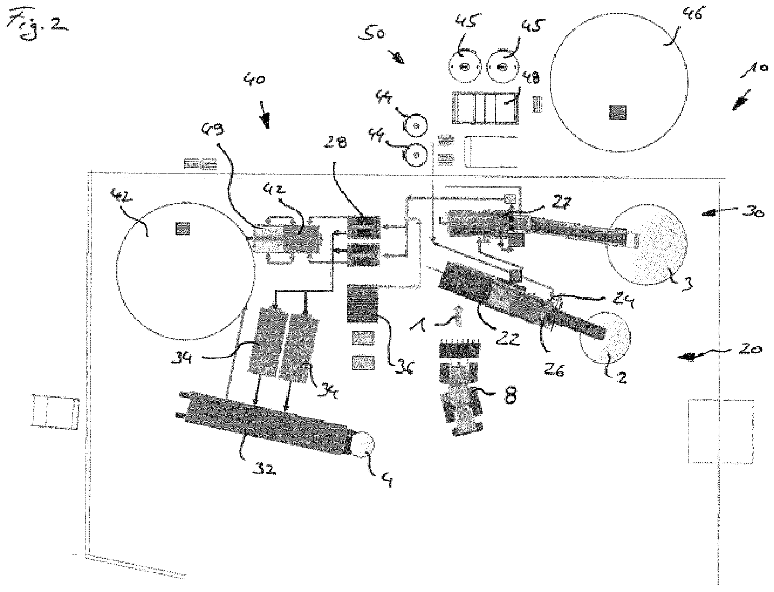

Eine mögliche Anordnung einer erfindungsgemäßen mobilen Anlage 10 ist in Figur 2 dargestellt. Über einen Radlader 8 kann zu reinigendes Bodenmaterial zu einem ersten Modul 20 mit einer Moduleinheit zum Sieben und Waschen 22 gefördert werden. Die Moduleinheit zum Sieben und Waschen 22 kann insbesondere ein Trommelsieb umfassen. Über eine Zuführeinrichtung 24 wird Prozesswasser, vorzugsweise aus einem Reinwasserbecken 46, welches in einem dritten Modul 40 angeordnet sein kann, zum Waschen zugeführt. Bei diesem Sieb- und Waschvorgang, bei dem auch eine zusätzliche Siebeinrichtung 26 zum Einsatz kommen kann, wird ein Grobkorn 2 aus dem Bodenmaterial 1 abgetrennt. Das Grobkorn 2 kann über eine entsprechende Fördereinrichtung zu einer schematisch angedeuteten Ablagestelle gefördert werden.

Der verbliebene Anteil an Bodenmaterial mit feineren Kornbestandteilen wird als ein Prozessschlamm mittels einer Pumpe zu einer Moduleinheit zum Entsanden 27 weitergeleitet. In der Moduleinheit zum Entsanden 27 kann ein Mittelkorn 3 mit einer Korngröße zwischen 0,05 ...0,063 mm bis 5 mm abgetrennt und über eine entsprechende Fördereinrichtung zu einer Ablagestelle abgefördert werden.

Der verbliebene Prozessschlamm mit den feinen Kornbestandteilen sowie den wasserlöslichen Verunreinigungen wird in einen Lamellenklärer 28 weitergeleitet. Der im Lamellenklärer anfallende Schlamm wird zu einem zweiten Modul 30 mit einer Moduleinheit zur Filtration, insbesondere mit einer Kammerfilterpresse 32 , weitergeleitet.

Von einer Moduleinheit mit Dosierstation 36 kann ein Flockungsmittel dem Prozessschlamm vor dem Lamellenklärer zugesetzt werden, so dass mit besonders hoher Zuverlässigkeit Feinkorn abgetrennt wird.

In der Kammerfilterpresse 32 kann insbesondere ein stichfester Filterkuchen mit dem Bestandteil an Feinkorn ausgegeben werden, während das filtrierte Prozesswasser als sogenanntes Filtrat einem Rohwasserbecken 42 zugeleitet wird. Dem Rohwasserbecken 42 wird auch das abgetrennte Prozesswasser mit Verunreinigungen aus der Moduleinheit zum Abtrennen 28 zugeleitet. Über das dritte Modul 40 mit vorzugsweise Sandfilter 44 r und/oder einen PFAS-Adsorptionseinheit 45 können die unerwünschten Schadstoffe aus dem Prozesswasser abgetrennt werden.

Das so gereinigte Wasser kann dann in einem Reinwasserbecken 46 aufgenommen werden. Über entsprechende Verbindungsleitungen und entsprechende Anschlüsse an den einzelnen Moduleinheiten und Modulen kann das Prozesswasser aus dem Rohwasserbecken 42 und dem Reinwasserbecken 46 an die gewünschten Stellen zugeführt werden, so dass insgesamt ein weitgehend geschlossener Wasserkreislauf besteht. Die Notwendigkeit zum Zuführen von Frischwasser entfällt hierdurch weitgehend und ist auf den Ersatz eines unvermeidbaren Wasserverlustes im Prozessverlauf beschränkt.

Eine Steuerung der mobilen Anlage 10 kann über ein viertes Modul mit Steuerungstechnik 50 erfolgen, welches schematisch in einem Mitten- oder Seitenbereich der Anlage 10 angeordnet sein kann.

## Patentansprüche

1. Mobile Anlage zum Reinigen von Bodenmaterial (1) oder mineralischem Abfall von wasserlöslichen chemischen Substanzen, insbesondere von PFAS, mit
- einem ersten Modul (20), welches zumindest eine Moduleinheit zum Sieben und Waschen (22) umfasst, welche eine Zuführeinrichtung (24) zum Zuführen von Prozesswasser zu dem zu reinigenden Bodenmaterial (1) /mineralischem Abfall und eine Siebeinrichtung (26) aufweist, mit welchem ein Grobkorn (2) abtrennbar und waschbar ist, wobei feinerer Kornanteil des zu reinigenden Bodenmaterials (1)/mineralischen Abfalls verbleibt, durch welchen zusammen mit Prozesswasser ein Prozessschlamm gebildet ist,
- einem zweiten Modul (30), welches eine Moduleinheit zum Abtrennen von Prozesswasser aus dem Prozessschlamm (28) aufweist,
- einem dritten Modul (40), welches zumindest eine Moduleinheit mit einem Rohwasserbecken (42) zum Aufnehmen von Prozesswasser mit aufgenommenen chemischen Substanzen, insbesondere PFAS, eine Moduleinheit mit mindestens einer Filtereinrichtung (44) und/oder einer Adsorptionseinheit (45) zum Filtern des Prozesswassers bzw. zum Abtrennen der chemischen Substanzen, insbesondere von PFAS, und mindestens eine Moduleinheit mit einem Reinwasserbecken (46) zum Aufnehmen des gefilterten/behandelten Prozesswassers aufweist, und
- einem vierten Modul (50) mit mindestens einer Moduleinheit zum Steuern der Anlage,
wobei die einzelnen Moduleinheiten als eigenständige und von einem Lastkraftwagen transportierbare Einheiten ausgebildet sind, wobei die Anlage (10) insgesamt leicht transportierbar und montierbar ist.

2. Mobile Anlage nach Anspruch 1,
**dadurch gekennzeichnet,**
**dass** mindestens eine transportable Moduleinheit, vorzugsweise alle Moduleinheiten, Abmessungen aufweisen, welche den Abmessungen von Standard-Transportcontainern entsprechen oder innerhalb dieser Abmessungen liegen.

3. Mobile Anlage nach Anspruch 1 oder 2,
**dadurch gekennzeichnet,**
**dass** mindestens eine Moduleinheit, vorzugsweise alle Moduleinheiten, selbsttragend ausgebildet sind, insbesondere mit einer Tragplattform und/oder einem Tragrahmen.

4. Mobile Anlage nach einem der Ansprüche 1 bis 3,
**dadurch gekennzeichnet,**
**dass** mindestens eine Moduleinheit, vorzugsweise alle Moduleinheiten, mindestens eine Verbindungseinrichtung für ein Hebezeug aufweisen.

5. Mobile Anlage nach einem der Ansprüche 1 bis 4,
**dadurch gekennzeichnet,**
**dass** an den Moduleinheiten an definierten Stellen lösbare Anschlusseinrichtungen für Leitungen angeordnet sind, mit welchen Flüssigkeit, Energie und/oder Daten geleitet werden können.

6. Mobile Anlage nach einem der Ansprüche 1 bis 5,
**dadurch gekennzeichnet,**
**dass** in dem ersten Modul (20) die Moduleinheit (22) zum Sieben und Waschen einen Trommelsieb umfasst, welches insbesondere eine rotierend angetriebene Siebtrommel aufweist.

7. Mobile Anlage nach einem der Ansprüche 1 bis 6,
**dadurch gekennzeichnet,**
**dass** in dem ersten Modul (20) zur Reduktion des Feststoffanteiles in dem Prozessschlamm eine Moduleinheit zum Entsanden (27) und/oder eine Moduleinheit mit einem Lamellenklärer (28) angeordnet ist.

8. Mobile Anlage nach einem der Ansprüche 1 bis 7,
**dadurch gekennzeichnet,**
**dass** in dem dritten Modul (40) die Moduleinheit mit der mindestens einen Filtereinrichtung eine Membranfilterpresse und/oder eine Kammerfilterpresse (32) zum Abtrennen eines Anteiles an Feinkorn (4) aus dem Prozessschlamm aufweist.

9. Mobile Anlage nach einem der Ansprüche 1 bis 8,
**dadurch gekennzeichnet,**
**dass** in dem ersten Modul (20) und/oder dem zweiten Modul (30) und/oder dem dritten Modul (40) eine Station oder eine Moduleinheit zum Ansetzen und Zudosieren von Fällungsmitteln und/oder Flockungsmitteln (36) zu dem gebildeten Prozessschlamm angeordnet ist.

10. Mobile Anlage nach einem der Ansprüche 1 bis 7,
**dadurch gekennzeichnet,**
**dass** in dem dritten Modul (40) das Rohwasserbecken (42) mit verunreinigtem Prozesswasser und/oder das Reinwasserbecken (46) mit gereinigtem Prozesswasser über mindestens eine Rückführleitung mit zumindest einer der Moduleinheiten zur Rückführung von Prozesswasser leitungsverbunden sind.

11. Verfahren zum Betrieb einer mobilen Anlage (10) zum Reinigen von Bodenmaterial (1) oder mineralischem Abfall von wasserlöslichen chemischen Substanzen, insbesondere von PFAS, insbesondere nach einem der Ansprüche 1 bis 10, wobei
- in einem ersten Modul (20), welches zumindest eine Moduleinheit (22) zum Sieben und Waschen umfasst, welche eine Zuführeinrichtung (24) zum Zuführen von Prozesswasser zu dem zu reinigenden Bodenmaterial (1)/mineralischem Abfall und eine Siebeinrichtung (26) aufweist, mit dem Prozesswasser aus dem zu reinigenden Bodenmaterial (1)/mineralischem Abfall ein Grobkorn (2) abgetrennt und gewaschen wird, wobei ein feinerer Kornanteil des zu reinigenden Bodenmaterials (1)/mineralischen Abfalls verbleibt, durch welchen zusammen mit Prozesswasser ein Prozessschlamm gebildet wird,
- in einem zweiten Modul (30) mittels einer Moduleinheit zum Abtrennen von Prozesswasser aus dem Prozessschlamm Prozesswasser aus dem Prozessschlamm abgetrennt wird,
- in einem dritten Modul (40), welches zumindest eine Moduleinheit mit einem Rohwasserbecken (42) zum Aufnehmen von Prozesswasser mit aufgenommenen chemischen Substanzen, insbesondere PFAS, eine Moduleinheit mit mindestens einer Filtereinrichtung (44) und/oder einer Adsorptionseinheit (45) zum Filtern des Prozesswassers bzw. zum Abtrennen der chemischen Substanzen, insbesondere von PFAS, und mindestens eine Moduleinheit mit einem Reinwasserbecken (46) zum Aufnehmen des gefilterten/behandelten Prozesswassers aufweist, mittels der mindestens einen Filtereinrichtung (44) und/oder einer Adsorptionseinheit (45) durch Filtern von Prozesswasser bzw. Abtrennen der im Prozesswasser mit aufgenommenen chemischen Substanzen, insbesondere PFAS, ein gereinigtes Reinwasser erzeugt wird, und
- durch ein viertes Modul (50) mit mindestens einer Moduleinheit zum Steuern die mobile Anlage (10) gesteuert wird,
wobei als einzelne Moduleinheiten eigenständige und von einem Lastkraftwagen transportierbare Einheiten verwendet werden, wobei die Anlage (10) insgesamt leicht transportierbar und montierbar ist.

12. Verfahren nach Anspruch 11,
**dadurch gekennzeichnet,**
**dass** die Anlage (10) nach einer Reinigung des Bodenmaterials (1) oder des mineralischen Abfalls an einem ersten Arbeitsort in die einzelnen Moduleinheiten zerlegt und die Moduleinheit abtransportiert werden, um an einem zweiten Arbeitsort wieder zu der Anlage (10) montiert zu werden.
